# EUROPEAN PATENT SPECIFICATION

(11) **EP 3 744 769 B1**
(45) Date of publication and mention of the grant of the patent: **26.11.2025**
(21) Application number: 20177536.8
(22) Date of filing: 29.05.2020
(51) Int. Cl.: C08J 5/18

(54) **FILM AND PRODUCTION METHOD**
FOLIE UND HERSTELLUNGSVERFAHREN
FILM ET PROCÉDÉ DE PRODUCTION

(30) Priority: 31.05.2019 GB 201907793
(43) Date of publication of application: 02.12.2020
(73) Proprietor: Jozef Stefan Institute, 1000 Ljubljana (SI); University of Maribor, 2000 Maribor (SI)
(72) Inventor: GLASER, Tjasa Krasevac, 2000 Maribor (SI); MOZETIC, Miran, 1000 Ljubljana (SI); OGRINC, Nives, 1000 Ljubljana (SI); VESEL, Alenka, 1000 Ljubljana (SI); ZEMLJIC, Lidija Fras, 2000 Maribor (SI)
(74) Representative: Zacco GmbH

(56) References cited:
- WO-A1-2006/080672
- CN-A- 106 750 580
- KR-B1- 101 417 767

## Description

### Field of the Invention

The present invention relates to films or foils which are both antimicrobial and antioxidant, and particularly, although not exclusively, to such films or foils for use in food packaging.

### Background

Biodegradable packaging material has become an essential part of the global food packaging market aiding to the ever-increasing consumer awareness and importance of eco-friendly substitutes. The demand for biodegradable packaging is increasing and will continue to increase as the companies utilize packaging like a medium to protect their products and promote the safety of the environment. New competitive bio-based packaging solutions are multifunctional, economically viable and can be easily incorporated in present industrial manufacturing processes.

Over recent decades, much research on the development of innovative food packaging materials has been carried out with a view to combat against pathogens; reduce spoilage and waste; optimize process efficiency; reduce the need for chemical preservatives; improve the functionality of foods; and improve the nutritional and sensorial properties of food, responding to the demands of different consumer niches and markets, also in terms of affordability. Only a few of these solutions have been economically, ecologically and health friendly; thus, there is still a great challenge involved in investigation of new concepts for active packaging materials.

Beside increasing public health awareness, the changes in retailing practices (such as a market globalization resulting in a longer distribution of food) and the fact that the industry must follow the strict packaging guidelines and regulations all act as a driving force for significant interest in incorporating *natural* antimicrobial ingredients into packaging material when developing an active concept of packaging.

Examples of natural biodegradable and bioactive substances are antimicrobial polysaccharides and their derivatives. Chitosan, obtained from chitin by partial de-acetylation, which makes it water-soluble in acidic-aqueous solutions, has diverse and important properties, such as biocompatibility, biodegradability, and non-toxicity, and it is widely known as a valuable material for different biomedical and food applications. However, in spite of chitosan's excellent *antimicrobial* activity, it has been found that it shows very poor *antioxidant* activity, which is required for a bioactive packaging material to retard the natural processes of the food leading to its spoilage by reducing oxygen and moisture. (The oxidative deterioration of meat products is caused by the degradation reactions of fats and pigments.)

Thus, it is desirable to increase the antioxidant activity of chitosan with natural compounds with proven high antioxidant capacity, such as plant phenols. Tocopherols are the only natural food-grade antioxidants currently regulated as such by the FDA (Food and Drug Administration). Spices and flavourings such as rosemary and sage are regulated only as flavourings. An ever-popular trend is the use of vegetable and essential oils as natural antioxidants. Some plant extracts such as grapefruit seed, cinnamon, horseradish, clove, garlic and many others have been previously added to packaging systems to demonstrate an effective antioxidant-antimicrobial activity against spoilage and pathogens bacteria.

There are numerous publications of chitosan coatings for improved properties of foils or films for food industry (WO2006/080672A1).

In general, those discuss application of chitosan as an antibacterial substance. Chitosan is applied in various forms and may or may not be mixed with other substances.

Chitosan is known for its antibacterial properties, which are particularly enhanced when it is used in the form of nanoparticles. The *antibacterial* properties of packaging foils can thus be improved by using methods described in those publications; however, a simultaneous significant *reduction of oxygen permeation* and *antioxidant* activity is still needed.

Polymeric materials of the type often used in packaging, such as polyethylene or polypropylene, are often inadequate because of rather large permeability for gases such as oxygen, little or no antioxidant properties and little or no antibacterial properties. While there are numerous methods for improving these properties of PE or PP materials, only few enable excellent reduction of permeability simultaneously with the antioxidant and antimicrobial properties.

The present invention has been devised in light of the above considerations.

### Summary of the Invention

The present invention relates to methods for synthesizing materials, particularly for food packaging. The superior properties of the materials can be made by pre-treatment of a polymeric substrate with oxygen followed by coating with a chitosan layer followed by coating with a layer comprising an antioxidant (such as polyphenol, resveratrol, catechin and/or pomegranate extract) and chitosan nanoparticles.

The inventors have found that such products and methods are highly effective. As set out in the Examples, the materials exhibit over 90% reduction of Staphylococcus aureus as compared to untreated polymeric layers, reduction of oxygen permeability by over 90% and an increase of antioxidant activity by a factor of more than 10.

The methods and products are useful in different applications where such properties of packaging materials are desired. Exemplary usage is for packaging of food such as meat, vegetables, dairy & bakery products, pharmacy packaging, etc.

In a first aspect, the present invention provides a packaging material, comprising: (a) a polymeric substrate layer; (b) a chitosan layer, formed on the polymeric substrate layer; and (c) an active layer, comprising chitosan nanoparticles and an antioxidant material , formed on the chitosan layer.

Preferably the active layer comprises a network of chitosan nanoparticles having antioxidant material encapsulated therein and/or embedded on their outer surface, formed on the chitosan layer.

In some embodiments, the antioxidant may be at least one selected from naturally occurring antioxidants such as polyphenols, resveratrol, catechin and pomegranate extract. Suitably, the antioxidant material comprises a polyphenol (for example, a polyphenol other than resveratrol) and at least one selected from resveratrol, catechin and pomegranate extract.

The total content of the at least one selected from resveratrol, catechin and pomegranate extract may suitably be 0.1 to 10 w/v%, for example 0.3 to 2 w/v%.

The content of chitosan nanoparticles in the active layer may suitably be 0.5 to 4 w/v%.

In view of solubility, availability or activity, the chitosan in the chitosan layer and/or the active layer may preferably have a number average molecular weight of 10 to 300 kDa, for example 50 to 200 kDa.

In some embodiments the polymeric substrate layer comprises polyethylene or polypropylene.

In a second aspect, the present invention provides a method of manufacturing a packaging material, for example a packaging material as set out herein, comprising the steps of: (a) treating a polymeric substrate layer with oxygen, for example neutral oxygen atoms at a dose of between 10²⁰ and 10²⁴ m⁻²; (b) applying a solution of chitosan to the treated polymeric substrate layer, to form a chitosan layer on the polymeric substrate layer; and (c) applying a solution containing an antioxidant material and chitosan nanoparticles to the chitosan layer, to form an active layer on the chitosan layer.

Drying the chitosan and/or active layers after they have been applied may be useful. Therefore, the method may, after step (b) and before step (c), include a step of drying the chitosan layer. The method may, after step (c), include a step of drying the active layer.

The solution of chitosan used in step (b) may optionally be prepared by dissolving chitosan powder in water and adjusting the pH of the resultant solution to 3 to 5. This preparation may be a separate step of the present methods. The solution may optionally further comprise acetic acid.

In some embodiments, the solution used in step (c) comprises a polyphenol, 0.5 to 4 w/v% of chitosan nanoparticles and 0.1 to 10 w/v% of at least one selected from resveratrol, catechin and pomegranate extract.

Optionally, in the present methods, the chitosan nanoparticles are prepared by ionic gelation of a solution comprising chitosan, water and sodium tripolyphosphate, the solution optionally further comprising a polyphenol (for example, a polyphenol other than resveratrol) and at least one selected from resveratrol, catechin and pomegranate extract. The ionic gelation may be performed by magnetic stirring of the solution.

The present invention also provides an apparatus, optionally for performing a method as described herein or for producing a packaging material as described herein, comprising in sequence: (a) a unit for treatment of a polymeric substrate layer with neutral oxygen atoms; (b) a unit for applying a solution of chitosan to the treated polymeric substrate layer; and (c) a unit for applying a solution containing an antioxidant material and chitosan nanoparticles.

The apparatus may optionally comprise, after unit (b) and before unit (c), a first drying unit; and/or may optionally comprise, after unit (c), a second drying unit.

The present invention also provides for the use of a packaging material as described herein as a food packaging. That is, the invention related to a food packaging item comprising a packaging material as described herein.

The present invention also relates to a coating for packaging materials. The coating comprises a network of chitosan nanoparticles having antioxidant material encapsulated therein and/or embedded on their outer surface. It may further comprise a chitosan layer upon which the network is formed.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:

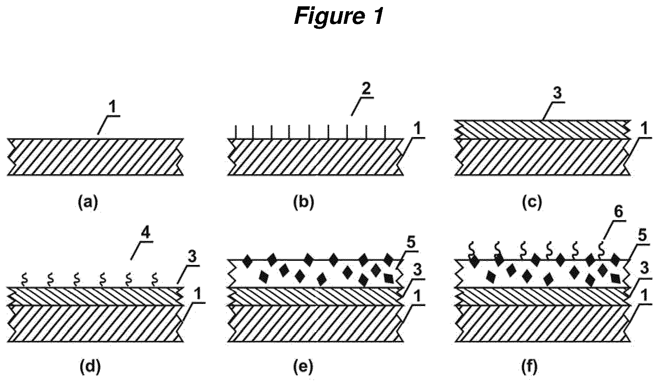

**Figure 1** shows schematically an embodiment of a packaging material of the present invention.

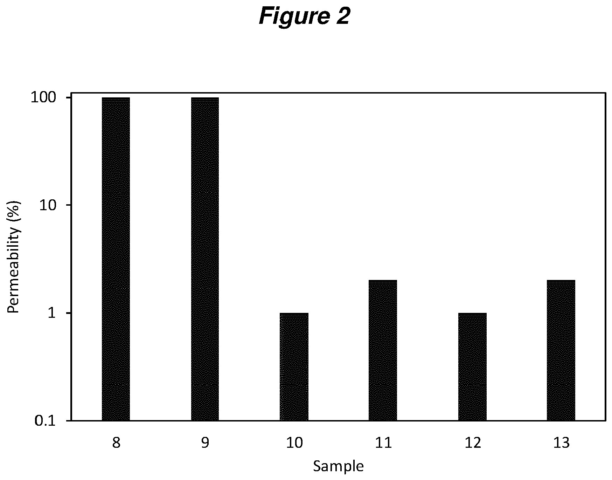

**Figure 2** shows normalized oxygen permeability for an untreated PE foil (8), an untreated PP foil (9), a PE foil with a coating containing catechin (10), a PP foil with a coating containing catechin (11), a PE foil with a coating containing pomegranate extract (12) and a PP foil with a coating containing pomegranate extract (13) deposited according to the methods of invention.

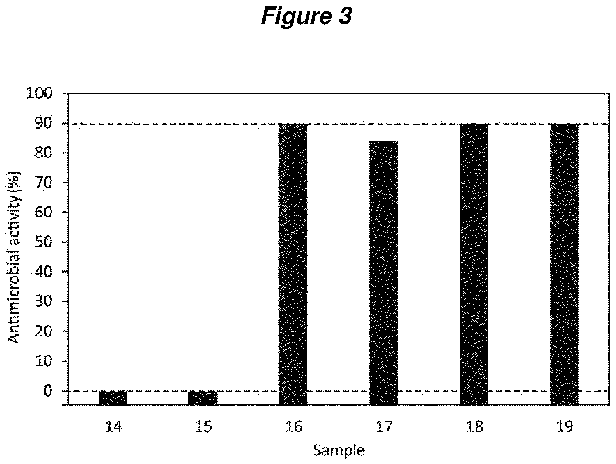

**Figure 3** shows the normalized antimicrobial activity for an untreated PE foil (14), an untreated PP foil (15), a PE foil with a coating containing catechin (16), a PP foil with a coating containing catechin (17), a PE foil with a coating containing pomegranate extract (18) and a PP foil with a coating containing pomegranate extract (19) deposited according to the methods of invention. The detection limit (90%) is represented by a dashed line.

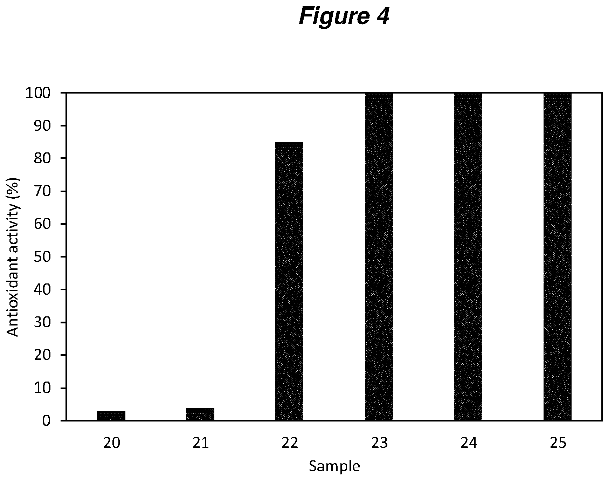

**Figure 4** shows the antioxidant activity for an untreated PE foil (20), an untreated PP foil (21), a PE foil with a coating containing catechin (22), a PP foil with a coating containing catechin (23), a PE foil with a coating containing pomegranate extract (24) and a PP foil with a coating containing pomegranate extract (25) deposited according to the methods of invention.

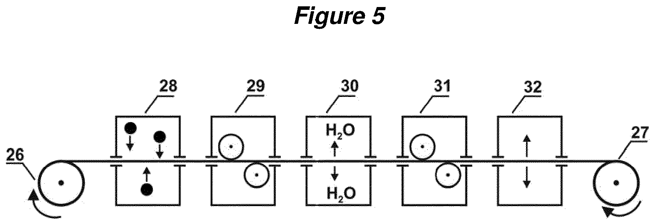

**Figure 5** shows schematically an apparatus suitable for treatment of polymer substrates in a continuous mode according to methods of invention.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

### Substrate

Packaging materials generally have a bulk substrate which is formed to the desired shape or style of the packaging. For example it may create a container for a product to be placed in, or a lid to close such a container. Such substrates are advantageously coated with the films of the present invention to form functional packaging materials.

In the present invention, the substrate is not particularly limited but should suitably be a polymeric material. It may be, for example, polyethylene (PE) or polypropylene (PP). Such polymeric materials are widely used and understood in the packaging field, especially with regard to food packaging.

### Chitosan Layer

The chitosan layer is formed on top of the polymeric substrate layer, for example to entirely cover it (all such is not essential). The chitosan layer may suitably be a thin film. The chitosan layer acts as an intermediate layer between the substrate and the active layer.

The chitosan layer acts as a barrier for oxygen diffusion as well as an antibacterial coating. It also promotes adhesion of the active layer (discussed below), therefore allowing the active layer to be adhered to the polymeric substrate firmly and effectively. Without the chitosan layer, the active layer does not adhere well to the polymeric substrate layer and would not be evenly distributed thereon.

The chitosan used in this layer is preferably of relatively low molecular weight. For example, it may have a number average molecular weight of 10 to 300 kDa, for example 50 to 200 kDa. The molecular weight may be found by viscosity measurement, for example using the Mark-Houwink equation. Accoridngly this can be referred to as a viscosity-average molecular weight.

Chitosan is a natural antibacterial substance. It is an aminopolysaccharide molecule with a strong positive electrical charge, which strongly attracts and bonds to negatively charged molecules. Chitosanderived biomaterials have received considerable attention as an antimicrobial, functional, renewable, nontoxic, biocompatible, bioabsorbable, and biodegradable biopolymer agent¹.

### Active Layer

The active layer, at its broadest, contains an antioxidant and chitosan nanoparticles. In particular, it may comprise a network of chitosan nanoparticles having antioxidant material encapsulated therein and/or embedded on the outer surface. Additional antioxidant material may also be present in the layer, for example dispersed between nanoparticles. Some solution containing chitosan may also be present in the active layer (the chitosan there not being in the form of nanoparticles).

For example, the active layer has chitosan nanoparticles in it, which encapsulate an antioxidant material such as a polyphenol, and have on their surface bonded, embedded, absorbed or adsorbed antioxidant material such as more polyphenol, resveratrol, catechin or pomegranate extract.

As the active layer may be applied as a solution, as discussed herein, containing not only the chitosan nanoparticles (optionally encapsulating antioxidant) but also further, non-nanoparticulate chitosan, further, non-encapsulated antioxidant, and solvent, for example, such components may also be present in the active layer.

Preferably, about 70% or more of the antioxidant material in the active layer is encapsulated within chitosan nanoparticles, more preferably 80% or more.

The active layer is formed on top of the chitosan layer.

The antioxidant may be selected from known antioxidant compounds and materials. It may be, for example, selected from polyphenols, such as resveratrol, flavan-3-ols such as catechin, or natural extracts such as pomegranate extract.

Where pomegranate extract is discussed herein, it is intended to refer broadly to antioxidants or mixtures or combinations of antioxidants found in or derived from parts of the pomegranate fruit. Polyphenols can come from pomegranate extract. However, pomegranate extract also contains other antioxidants such as anthocyanins, flavonoids, tannins etc.

All parts of the pomegranate fruit (peel, juice, seeds) have high antioxidant activity, but the highest antioxidant activity is found for peel extracts. Therefore, preferably a pomegranate fruit peel extract is used. A pomegranate extract may be prepared by, for example, lyophilisation and crushing the peel to make a powder. Then phenolic compounds can be extracted by using different solvents such as methanol, ethanol, acetone, chloroform, ethyl acetate, water, etc. Polar solvents have greater extraction capability than non-polar solvents. The use of different solvents yields different phenolic content in the extract and thus to different antioxidant activity².

For example, extraction may be done by mixing 1 g of lyophilised peel powder with 5 ml of 70% ethanol. Extraction may be performed in an ultrasound bath at 10 °C for 50 min. After the extraction, the mixture may be filtered through a 0.8 µm filter paper. The remaining ethanol may be removed by evaporation using a rotary evaporator, whereas remaining water may be removed by lyophilisation.

As already mentioned, high antioxidant activity of the pomegranate extract is explained by the presence of various phenolic compounds as well as antioxidants such as anthocyanins, flavonoids, flavanols and tannins. One of the most comprehensive investigation of antioxidants in the pomegranate extract was published³. The following **phenolic compounds** were found: galloyl-glucose, punicalagin α, peduncalagin I, punicalagin β, galloyl-HHDP-hexose, ellagic acid glucoside, granatin B, punigluconin, ellagic acid deoxyhexose, ellagic acid pentoside, ellagic acid, syringetin-hexoside, phellatin or amurensin, phlorizin. The following **anthocyanins** were found: delphinidin-3,5-diglycoside, cyanidin-3,5-diglycoside, pelargonidin-3,5-diglycoside, delphinidin-3-glycoside, cyanidin-pentoside-hexoside, (epi) afzelchin-delphinidin-3-hexoside, (epi) gallocatechin-pelargonidin-3-hexoside, (epi) afzelchin-delphinidin-3-hexoside, cyanidin-3-glycoside, (epi) gallocatechin -cyanidin-3-hexoside, cyanidin-3-rutinoside, pelargonidin-3-glycoside, (epi) catechin-cyanidin-3-hexoside.

Any one or more of these compounds may be used, alone or in any combination, as an antioxidant in the present invention. In the present invention, the pomegranate extract used contains at least 75% by weight, more preferably at least 85% by weight, more preferably at least 95% by weight and most preferably at least 98% by weight of these antioxidant compounds.

Because of genetic diversity of pomegranate plants, and other factors such as climate, soil etc., it was found that anthocyanins may vary between 20 to 82% of the total phenolic content. The content of flavonoids may vary between 1.6-24% of the total phenolic compounds, while phenolic acids and ellagitannins were found to be in the range between 16-66%.

Inclusion of polyphenol is particularly suitable, because as well as being antioxidant it binds well to chitosan nanoparticles, allowing them to be efficiently bonded to the chitosan layer and thus to the packaging material.

In certain embodiments, two antioxidants may be included. For example there may be a polyphenol and a further antioxidant, such as one, two or all three of resveratrol, catechin and pomegranate extract. In such embodiments, the polyphenol can form a strong network having the further antioxidant, such as resveratrol, catechin or active compounds from pomegranate extract, dispersed therein.

Where resveratrol, catechin and/or pomegranate extract are included in the active layer, the total content of it/them in the layer may suitably be 0.1 to 10 w/v%, for example 0.3 to 2 w/v%.

The antioxidant content of the active layer aids to slow oxidation processes in any product (for example food) contained within the packaging material of the present invention.

The chitosan nanoparticles are preferably formed from chitosan of relatively low molecular weight, for example, it may have a number average molecular weight of 10 to 300 kDa, for example 50 to 200 kDa.

The content of chitosan nanoparticles in the active layer may be, for example, 0.1 to 10 w/v%, for example 0.5 to 4 w/v%.

The chitosan nanoparticles may have a number average particle diameter, measured by SEM analysis, of 200 to 1000 nm.

Because of the use of nanoparticles of chitosan, the effective surface area of chitosan in the active layer is increased as compared to a standard thin film. Accordingly the antibacterial effects of the active layer are enhanced by the use of chitosan nanoparticles. The surface decoration with three-dimensional chitosan particles is thus advantageous.

The active layer, with its antioxidant network and chitosan nanoparticles, also serves as a further oxygen permeation barrier.

### Production Method

The present production method may be used to make a film or packaging material as set out herein. Broadly, the method has the steps of (a) treating a polymeric substrate layer with neutral oxygen atoms at a dose of between 10²⁰ and 10²⁴ m⁻²; (b) applying a solution of chitosan to the treated polymeric substrate layer, to form a chitosan layer on the polymeric substrate layer; and (c) applying a solution containing an antioxidant material and chitosan nanoparticles to the chitosan layer, to form an active layer on the chitosan layer.

**Figure 1** schematically shows a product at various stages of an exemplary production method. As will be explained in more detail below, in the illustrated embodiments, a polymeric substrate 1 (**Figure 1(a)**) is treated with atomic oxygen to form polar surface groups 2 (**Figure 1(b)**)**.** Then, a chitosan layer 3 is formed (**Figure 1(c)**) and optionally dried (**Figure 1(d)**) to evaporate excess solvent for example water 4. It is treated with a solution to form the active layer 5 (**Figure 1(e)**), and again optionally dried to evaporate excess solvent or other volatile molecules 6 (**Figure 1(f)**).

### Treatment with oxygen

In one step of the present methods, step (a), a polymeric substrate layer is treated with oxygen. The oxygen is suitably atomic or molecular oxygen (O or O₂) and is suitably neutral atomic oxygen. Ozone (O₃) may also be used.

"Neutral atomic oxygen", or "neutral oxygen atom", as used herein, can be understood to relate to a single oxygen atom not covalently bound, or connected to, a further atom.

In preferred embodiments, the oxygen is in free radical form. The oxygen is preferably not electrically charged (neither positively nor negatively). Hence, oxygen plasma is preferably excluded. The oxygen (for example oxygen atoms) may be in the ground state or in an excited state.

Examples include O-atoms in the ground and/or excited states, O₂ molecules in electronically excited states (often referred as the "a" and "b" state at the excitation energy of about 1 and 2 eV, respectively), OH radicals, ozone and hydrogen peroxide. Where O₂ is used, it may preferably not be in the "a" state. It may preferably not be in the singlet state, and may preferably be in the triplet state.

These species can be formed by any means, including thermal decomposition on the hot catalyst surface or by electron impact dissociation. Neutral atomic oxygen can also be formed in a remote plasma source, as described in G. Primc et al⁴, (Experimental method) which is incorporated by reference.

It may be preferred that the polymeric substrate layer is treated with sufficient oxygen to saturate the treated surface with polar functional groups, without other modifications of the substrate's properties.

The initial treatment with oxygen is advantageous in that it improves the wettability of the chitosan layer to be deposited onto the substrate. That is, a solution (generally, aqueous) of chitosan on a polymeric substrate without this oxygen treatment will not stick: instead of a thin film of the solution of chitosan, droplets will form spontaneously on the surface of the polymeric substrate. The formation of droplets is the consequence of the low surface energy of the polymeric layer such as PE or PP.

The present inventors have found that the formation of droplets is suppressed by increasing the surface energy, in particular the polar component of the surface energy. A standard technique for such might be application of gaseous plasma. However, the inventors have found that not all gaseous plasma, however, is suitable for increasing the polar component of the polymeric substrate (for example PE or PP) layers for food packaging.

In particular, plasma treatment causes not only an increase of the polymer surface energy, but also etching, formation of low-weight molecular fragments, modification of mechanical and chemical properties due to bond scission and so on. It also introduces new chemical groups that may act as binding sites for an adsorbate. These effects are detrimental for food packaging.

Thus, in a preferred embodiment of the invention, a UV-radiation free source of reactive oxygen gaseous species is applied for increasing the surface energy of polymeric substrate layer prior to deposition of a coating.

Suitably, neutral oxygen atoms in the ground state are applied for increasing the surface energy of the polymeric substrate layer.

A suitable method for production of neutral oxygen atoms is passing molecular oxygen through a series of heated catalysers taking advantage of the surface-stimulated dissociation, or through a gaseous discharge taking advantage of electron-impact dissociation.

The efficiency of the surface treatment with neutral oxygen atoms depends on their flux to the surface and the treatment time. Of course, there exists a range of mathematical products between atom fluxes and treatment times which are suitable for treatment of polymeric substrate layers (such as PE and PP) to increase the surface energy.

Herein, the product of an atom flux (number of atoms per unit area per unit time, unit = m⁻²s⁻¹) and treatment time (unit = s) will be called a dose. Too small dose can result in a poor wettability, and too large dose can result in etching of the polymeric substrate layer.

In a preferred embodiment, the dose is between 10²⁰ and 10²⁴ m⁻². In a further preferred embodiment, the dose is between 10²¹ and 10²³ m⁻².

### Chitosan layer

The chitosan layer is formed by applying a solution of chitosan to the polymeric substrate layer. For best effect this is done after the above treatment to increase the surface energy.

In general the chitosan solution is not particularly limited, but it may preferably be an aqueous solution. In some embodiments the water may be deionized water, and may be purified water. Chitosan is dissolved into the solution, often in the form of a powder or dust. Stirring can be carried out to ease dissolution.

*[It is noted that pure chitosan is theoretically soluble in pure water in a range of concentrations; however, the solubility of commercial materials is sometimes limited.]*

The chitosan itself may have properties as discussed above for the chitosan layer.

In order to further ease dissolution of chitosan in the solution, for example water, it may be preferable to reduce the pH of the water. Reduction to a pH of, for example, 3 to 5, preferably around 4, can enhance the dissolution of chitosan in the solution.

This reduction of pH may be performed by, for example, adding an appropriate amount of acid to the solution. Addition may be, for example, dropwise. Suitable acids include acetic acid. Of course, the chitosan may be added to the solution before or after the pH is adjusted.

Where acetic acid is used, an appropriate amount added to the solution may be, for example, 10 to 40 w/v%.

The solution to form the chitosan layer can be applied to the polymeric substrate layer by any method. Examples include immersion of the polymeric substrate layer in the solution of chitosan or spraying the solution of chitosan onto the polymeric substrate layer. Preferred techniques include roll printing and spraying as these are more easily incorporated in a continuous manufacturing process.

The preferred content of chitosan in the applied solution is up to 10 w/v%, more preferably 0.5 to 4 w/v%.

Suitably there is only a short time between the end of the above treatment to increase the surface energy of the polymeric substrate layer and the deposition of the chitosan solution to form the chitosan layer. Indeed the deposition may begin immediately after the pre-treatment.

For example, the time between these two steps may be less than 10 minutes, for example less than 5 minutes, less than 2 minutes, less than 1 minute or less than 30 seconds.

Once the chitosan solution has been applied, it may optionally be subjected to a drying step to remove excess solvent such as water and acetic acid. The drying may be performed by heating, or by resting at room temperature for an extended period of time. The drying step helps solidify the chitosan layer, and improves the uniformity of the coatings. It will be apparent that not all the solvent must necessarily be removed from the chitosan layer; merely enough for the active layer to be successfully deposited.

### Active layer

The ingredients of the final active layer are discussed above, and the same features and preferences apply here as appropriate.

The active layer is formed by applying a solution, sometimes referred to herein as a chitosan nanoparticle dispersion (CSNP) to the chitosan layer. The solution contains chitosan nanoparticles and an antioxidant as explained above.

The solution itself may be prepared by admixture in a suitable solvent. The chitosan nanoparticles may be pre-prepared, or may alternatively be formed in the solution *in situ.* For example, this can be done by the ionic gelation technique. As an example of such a technique, a solution using sodium tripolyphosphate can be described.

For example, a certain amount of sodium tripolyphosphate (thereafter: TPP) may be mixed with, for example, polyphenol solution, and then mixed with a chitosan aqueous solution. A suitable weight ratio of chitosan to TPP in the resultant mixture is, for example, 10:1 to 2:1, for example around 5:1. Chitosan nanoparticles can then be formed spontaneously under, for example, magnetic stirring for approximately 1 h at room temperature.

Optionally, the pH of the CSNP is then adjusted to 3 to 5, preferably around 4, in order to improve the dispersion of the chitosan nanoparticles. This reduction of pH may be performed by, for example, adding an appropriate amount of acid to the solution. Addition may be, for example, dropwise. Suitable acids include acetic acid. Where acetic acid is used, an appropriate amount added to the solution may be, for example, 10 to 40 w/v%.

At any stage an antioxidant may be added to the CSNP. For example, it may be added before chitosan nanoparticles are added to a solution; or after the nanoparticles are added; before or after the pH is adjusted; and even before or after the chitosan nanoparticles are synthesised if that is being done *in situ.*

If antioxidant is present in solution with chitosan before nanoparticles are formed, for example, this may lead to encapsulation of antioxidant within the formed chitosan nanoparticles. It may therefore be preferable to form the chitosan nanoparticles in situ in a solution containing an antioxidant material as defined herein.

The antioxidant itself may be as explained above for the active layer. There may be one or more antioxidants, for example two or more or three or more. In some embodiments, a polyphenol is included.

The preferred concentration of antioxidant within the CSNP is between 0.1 and 10 w/v%, more preferably between 0.3 and 2 w/v%.

The CSNP can be applied to the chitosan layer by any method. Examples include immersion in the CSNP or spraying the CSNP. Preferred techniques include roll printing and spraying as these are more easily incorporated in a continuous manufacturing process.

Once the CSNP has been applied, it may optionally be subjected to a drying step to remove excess solvent such as water and acetic acid. The drying may be performed by heating, or by resting at room temperature for an extended period of time. It will be apparent that not all the solvent must necessarily be removed.

### Apparatus

The present invention also relates to apparatuses for making packaging materials, and for depositing films, of the present invention. For example the apparatus of the present invention may be one for performing one of the methods of the present invention or for manufacturing a film or material of the present invention.

**Figure 5** illustrates schematically an example of such an apparatus. In that example, a substrate material is treated in a continuous manner, 'roll-to-roll', but of course that is not essential. The untreated polymeric substrate 1 passes from a first roll 26 to a second roll 27, via a series of treatment units.

The apparatus includes, in sequence, (a) a unit for treatment of a polymeric substrate layer with neutral oxygen atoms; (b) a unit for applying a solution of chitosan to the treated polymeric substrate layer; and (c) a unit for applying a solution containing an antioxidant material and chitosan nanoparticles. There may optionally be a drying unit between (b) and (c), and may optionally be a further drying unit after (c).

In **Figure 5****,** the unit for treatment of a polymeric substrate layer with neutral oxygen atoms is a chamber 28. Atomic oxygen is continuously introduced into the chamber 28.

After this, in the second unit 29 the polymeric substrate is coated with a chitosan solution, for example by a roll-on method, or by spraying or dipping. Any suitable deposition method of the chitosan solution can be utilized here. Where present, the substrate then rolls through the first drying unit 30, which dries the chitosan layer (removing solvent such as water) and solidifying the thin film.

Next, the substrate passes into the unit 31, for depositing the solution for forming the active layer. Again, any suitable deposition method of the solution can be utilized here but a roll-on technique is illustrated. Others such as spraying or dipping could be used instead. Where present, the substrate then rolls through the second drying unit 32, which dries the chitosan layer (removing solvent such as water) and solidifying the active layer.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

### Examples

Materials used: Low-molecular weight chitosan (50 to 190 kDa, LMW), deacetylated chitin, Poly (D-glucosamine) from Sigma-Aldrich; Sodium tripolyphosphate - TPP (MW: 367.86 g/mol) from Sigma-Aldrich; (+)-Catechin hydrate (MW: 290.27 g/mol), ≥98% (HPLC) from Sigma-Aldrich; EtOH extract of Pomegranate, from Biotechnical Faculty Ljubljana; Acetic acid (MW: 60.05 g/mol), ≥99.8% from Sigma-Aldrich; Ethanol (MW 46.07 g/mol), 99.8% (GC) from Honeywell Sigma-Aldrich; MilliQ water - Milli-Q Direct system - Millipore, 0.2um PES High Flux Capsule Filter; Polyethylen - PE normal quality, transparent, GSM=46.28 g/m² (Thickness 50µm, Slippery 0.207) from Makoter d.o.o. ; Polypropylene - PP normal transparent oriented, GSM=22.93 g/m² (Thickness 27µm, Slippery 0.278) from Manucor S.p.A., Italy.

### SYNTHESIS EXAMPLE 1 - Film synthesis

### Preparation of catechin solution:

Catechin powder was suspended in absolute ethanol in order to prepare a 50 mg/ml solution.

### Preparation of pomegranate extract:

The pomegranate extract was prepared from the peel. Extraction was done by mixing 1 g of lyophilised peel powder with 5 ml of 70% ethanol. Extraction was performed in the ultrasound bath at 10 °C for 50 min. After the extraction, the mixture was filtered through a 0.8 µm filter paper. The remaining ethanol was removed by evaporation using a rotary evaporator, whereas remaining water was removed by lyophilisation. The antioxidant activity of such pomegranate extract was 98%.

### Preparation of TPP solution:

Sodium Tripolyphosphate powder was suspended in MQ-water in order to prepare a 0.2 w/v % solution.

### Preparation of chitosan nanoparticles and active layer solution:

Chitosan nanoparticles were prepared by the ionic gelation technique. Simultaneously 0.2% (w/v) of TPP solution and 12,5 mg/ml polyphenol solutions were added to a fixed volume of 1% (w/v) chitosan solution in order to obtain 5:1 chitosan to TPP weight ratio. Particles were formed spontaneously under magnetic stirring for 1 h at room temperature. The final pH of CS nanoparticles dispersions with polyphenols was adjusted to 4.0 by the addition of concentrated acetic acid.

The catechin solution or pomegranate extract was then added to form the solution for forming the active layer.

### Preparation of chitosan solution:

Different concentrations of chitosan solutions (1% and 2%, w/v), were prepared by dissolving LMW chitosan. Chitosan powder was suspended in MQ-water. Solution was kept under constant magnetic stirring while concentrated acetic acid was added drop-wise to enable the dissolution of chitosan. The solution was left stirring overnight and pH was adjusted with acetic acid to 4.0. The coating was applied in two layers (layer-by-layer deposition) to polyethylene and polypropylene foils. The first layer was made of 2% chitosan.

Then the solution for forming the active layer way applied. Thereby, nanoparticles with embedded polyphenols were added, in solution with either catechin or pomegranate extract, to form a polyethylene material whose active layer includes catechin, a polypropylene material whose active layer includes catechin, a polyethylene material whose active layer includes pomegranate extract, and a polypropylene material whose active layer includes pomegranate extract.

The foils were dried at each step at room temperature.

### EXAMPLE 1 - Oxygen Permeability

Oxygen permeability of each of the materials made in Synthesis Example 1 was measured. The oxygen permeability was determined using Oxygen Transmission Rate System PERME^{®} OX2/230, Labthink Instruments Co., Ltd. PR China, by standard ASTM D3985.

**Figure 2** shows the results. The results are for untreated polyethylene (8), untreated polypropylene (9), the polyethylene material whose active layer includes catechin (10), the polypropylene material whose active layer includes catechin (11), the polyethylene material whose active layer includes pomegranate extract (12), and the polypropylene material whose active layer includes pomegranate extract (13).

Normalization was performed for each.

A permeability of 100% indicated the permeability of oxygen for a particular untreated material.

A logarithmic scale is adopted in **Figure 2** to reveal the small permeability of the materials of the present invention.

The permeability for polyethylene or polypropylene materials coated according to the present invention is only 1% of the original (untreated) materiasl in the case of catechin. For the case of pomegranate extract the permeability of oxygen is 2% of the original value. The results presented in **Figure 2** therefore confirm the excellent barrier properties of the coatings.

### EXAMPLE 2 - Antimicrobial Activity

Antimicrobial activity of each of the materials made in Synthesis Example 1 was measured. A modified version of ISO 22196 (by using wet foils, and extending the testing time to 2 hours) was used for determination of the antimicrobial activity. The tested bacteria were Staphylococcus aureus.

**Figure 3** shows the results. The results are for untreated polyethylene (14), untreated polypropylene (15), the polyethylene material whose active layer includes catechin (16), the polypropylene material whose active layer includes catechin (17), the polyethylene material whose active layer includes pomegranate extract (18), and the polypropylene material whose active layer includes pomegranate extract (19).

Normalization was performed for each.

The untreated materials do not exhibit a measurable antimicrobial activity; therefore, the values were set to 0%.

The materials of the present invention exhibit excellent antimicrobial activity. The detection limit of this standard is 90% reduction of the viable bacteria as compared to the initial value. The detection limit is represented by a dashed line in **Figure 3****.** The concentration of viable bacteria on all materials of the present invention is below the detection limit of the standard adopted for these measurements.

The size of the columns for coated materials therefore only presents the minimal antibacterial efficacy for the samples treated according to the invention.

### EXAMPLE 3 - Antioxidant Activity

Antioxidant activity of each of the materials made in Synthesis Example 1 was measured. An important property of materials that come to contact with food is antioxidant activity. Antioxidant activity was determined using a biochemical reagent, ABTS (2,2'-azino-bis(3-ethylbenzothiazoline-6-sulphonic acid)). The method is based on the reduction of the ABTS•+ radical, which is determined spectrophotometrically at a wavelength of 734 nm 15 minutes after adding the reagent.

**Figure 4** shows the results. The results are for untreated polyethylene (20), untreated polypropylene (21), the polyethylene material whose active layer includes catechin (22), the polypropylene material whose active layer includes catechin (23), the polyethylene material whose active layer includes pomegranate extract (24), and the polypropylene material whose active layer includes pomegranate extract (25).

The untreated materials exhibit a small antioxidant activity at 2 and 4 % for PE and PP, respectively. The antioxidant activity for samples prepared according to the present invention is much higher. For all samples, except for the PE whose active layer contained catechin (22), 100% inhibition is achieved. For the sample (22), 85% is achieved.

### References

A number of publications are cited above in order to more fully describe and disclose the invention and the state of the art to which the invention pertains. Full citations for these references are provided below. The entirety of each of these references is incorporated herein.
1 M. Halleluyah Periayah; A. Sukari Halim; A. Zaharil Mat Saad; "Chitosan: A promising marine polysaccharide for biomedical research", Pharmacogn Rev. 2016 Jan-Jun; 10(19): 39-42
2 T. Ismail; P. Sestili; S. Akhtar; "Pomegranate peel and fruit extracts: A review of potential antiinflammatory and anti-infective effects", Journal of Ethnopharmacology, Volume 143, Issue 2, 28 September 2012, Pages 397-405.
3 A.M. Gómez-Caravaca; V. Verardo; M. Toselli; A. Segura-Carretero; A. Fernández-Gutiérrez; M. Fiorenza Caboni; "Determination of the Major Phenolic Compounds in Pomegranate Juices by HPLC-DAD-ESI-MS"; Journal of Agricultural and Food Chemistry, 2013, 61 (22), 5328-5337
4 G. Primc; R. Zaplotnik; A.Vesel; M. Mozetic; "Microwave discharge as a remote source of neutral oxygen atoms"; AIP Advances 1, 022129 (2011)

## Claims

1. A packaging material, comprising:
(a) a polymeric substrate layer;
(b) a chitosan layer, formed on the polymeric substrate layer; and
(c) an active layer, comprising chitosan nanoparticles and an antioxidant material, formed on the chitosan layer.

2. A packaging material according to claim 1, wherein the active layer comprises a network of chitosan nanoparticles having antioxidant material encapsulated therein and/or embedded on their outer surface, formed on the chitosan layer.

3. A packaging material according to claim 1 or claim 2, wherein the antioxidant material is at least one selected from polyphenols, resveratrol, catechin and pomegranate extract; or wherein the antioxidant material comprises a polyphenol and at least one selected from resveratrol, catechin and pomegranate extract.

4. A packaging material according to claim 3, wherein the total content of the at least one antioxidant material in an applied solution selected from resveratrol, catechin and pomegranate extract is 0.1 to 10 w/v%.

5. A packaging material according to any preceding claim, wherein the content of chitosan nanoparticles in an applied solution forming the active layer is 0.5 to 4 w/v%.

6. A packaging material according to any preceding claim, wherein the chitosan in the chitosan layer and/or the active layer has an average molecular weight of 10 to 300 kDa, as measured according to the description.

7. A packaging material according to any preceding claim, wherein the polymeric substrate layer comprises polyethylene or polypropylene.

8. A method of manufacturing a packaging material, optionally a packaging material according to any preceding claim, comprising the steps of:
(a) treating a polymeric substrate layer with neutral oxygen atoms at a dose of between 10²⁰ and 10²⁴ m⁻²;
(b) applying a solution of chitosan to the treated polymeric substrate layer, to form a chitosan layer on the polymeric substrate layer; and
(c) applying a solution containing an antioxidant material and chitosan nanoparticles to the chitosan layer, to form an active layer on the chitosan layer.

9. A method according to claim 8, wherein after step (b) and before step (c) there is a step of drying the chitosan layer; and/or wherein after step (c) there is a step of drying the active layer.

10. A method according to any one of claims 8 and 9, wherein the solution of chitosan used in step (b) is prepared by dissolving chitosan powder in water and adjusting the pH of the resultant solution to 3 to 5.

11. A method according to any one of claims 8 to 10, wherein the solution used in step (c) comprises a polyphenol, 0.5 to 4 w/v% of chitosan nanoparticles and 0.1 to 10 w/v% of at least one selected from resveratrol, catechin and pomegranate extract.

12. A method according to any one of claims 8 to 11, wherein the chitosan nanoparticles are prepared by ionic gelation of a solution comprising chitosan, water and sodium tripolyphosphate, the solution optionally further comprising a polyphenol and at least one selected from resveratrol, catechin and pomegranate extract.

13. Use of a packaging material according to any one of claims 1 to 7 in a food packaging.

## Patentansprüche

1. Verpackungsmaterial, umfassend:
(a) eine Polymer-Substratschicht;
(b) eine Chitosan-Schicht, die auf der Polymer-Substratschicht ausgebildet ist; und
(c) eine aktive Schicht, die Chitosan-Nanopartikel und ein antioxidatives Material umfasst, das auf der Chitosan-Schicht ausgebildet ist.

2. Verpackungsmaterial nach Anspruch 1, wobei die aktive Schicht ein Netz aus Chitosan-Nanopartikeln umfasst, in denen ein antioxidatives Material eingekapselt und/oder auf ihrer Oberfläche eingebettet ist, ausgebildet auf der Chitosan-Schicht.

3. Verpackungsmaterial nach Anspruch 1 oder Anspruch 2, wobei das antioxidative Material mindestens eines ausgewählt aus Polyphenolen, Resveratrol, Catechin und Granatapfelextrakt ist; oder wobei das antioxidative Material ein Polyphenol und mindestens eines ausgewählt aus Resveratrol, Catechin und Granatapfelextrakt umfasst.

4. Verpackungsmaterial nach Anspruch 3, wobei der Gesamtgehalt des mindestens einen antioxidativen Materials in einer aufgetragenen Lösung ausgewählt aus Resveratrol, Catechin und Granatapfelextrakt 0,1 bis 10 Gewichtsprozent ist.

5. Verpackungsmaterial nach einem der vorhergehenden Ansprüche, wobei der Gehalt der Chitosan-Nanopartikel in einer aufgetragenen Lösung, die die aktive Schicht bildet, 0,5 bis 4 Gewichtsprozent ist.

6. Verpackungsmaterial nach einem der vorhergehenden Ansprüche, wobei das Chitosan in der Chitosan-Schicht und/oder der aktiven Schicht ein durchschnittliches Molekulargewicht von 10 bis 300 kDa aufweist, gemessen gemäß der Beschreibung.

7. Verpackungsmaterial nach einem der vorhergehenden Ansprüche, wobei die Polymer-Substratschicht Polyethylen oder Polypropylen umfasst.

8. Verfahren zum Herstellen eines Verpackungsmaterials, optional eines Verpackungsmaterials nach einem der vorhergehenden Ansprüche, welches die folgenden Schritte umfasst:
(a) Behandeln einer Polymer-Substratschicht mit neutralen Sauerstoffatomen mit einer Dosis zwischen 10²⁰ und 10²⁴ m²;
(b) Auftragen einer Lösung aus Chitosan auf die behandelte Polymer-Substratschicht, um eine Chitosan-Schicht auf der Polymer-Substratschicht zu bilden; und
(c) Auftragen einer Lösung, die ein antioxidatives Material und Chitosan-Nanopartikel enthält, auf die Chitosan-Schicht, um eine aktive Schicht auf der Chitosan-Schicht zu bilden.

9. Verfahren nach Anspruch 8, wobei es nach Schritt (b) und vor Schritt (c) einen Schritt zum Trocknen der Chitosan-Schicht gibt; und/oder wobei es nach Schritt (c) einen Schritt zum Trocknen der aktiven Schicht gibt.

10. Verfahren nach einem der Ansprüche 8 und 9, wobei die Chitosan-Lösung, die in Schritt (b) verwendet wird, durch Auflösen von Chitosan-Pulver in Wasser und Anpassen des pH-Werts der resultierenden Lösung auf 3 bis 5 hergestellt wird.

11. Verfahren nach einem der Ansprüche 8 bis 10, wobei die Lösung, die in Schritt (c) verwendet wird, ein Polyphenol, 0,5 bis 4 Gewichtsprozent von Chitosan-Nanopartikeln und 0,1 bis 10 Gewichtsprozent von mindestens einem ausgewählt aus Resveratrol, Catechin und Granatapfelextrakt umfasst.

12. Verfahren nach einem der Ansprüche 8 bis 11, wobei die Chitosan-Nanopartikel durch ionische Gelierung einer Lösung, die Chitosan, Wasser und Natriumtripolyphosphat umfasst, hergestellt werden, wobei die Lösung optional ferner ein Polyphenol und mindestens eines ausgewählt aus Resveratrol, Catechin und Granatapfelextrakt umfasst.

13. Verwendung eines Verpackungsmaterials nach einem der Ansprüche 1 bis 7 in einer Lebensmittelverpackung.

## Revendications

1. Matériau d'emballage, comprenant :
(a) une couche de substrat polymère ;
(b) une couche de chitosane, formée sur la couche de substrat polymère ; et
(c) une couche active, comprenant des nanoparticules de chitosane et un matériau antioxydant, formée sur la couche de chitosane.

2. Matériau d'emballage selon la revendication 1, dans lequel la couche active comprend un réseau de nanoparticules de chitosane ayant un matériau antioxydant encapsulé à l'intérieur et/ou incorporé sur leur surface extérieure, formé sur la couche de chitosane.

3. Matériau d'emballage selon la revendication 1 ou la revendication 2, dans lequel le matériau antioxydant est au moins un élément choisi parmi les polyphénols, le resvératrol, la catéchine et l'extrait de grenade ; ou dans lequel le matériau antioxydant comprend un polyphénol et au moins un élément choisi parmi le resvératrol, la catéchine et l'extrait de grenade.

4. Matériau d'emballage selon la revendication 3, dans lequel la teneur totale en l'au moins un matériau antioxydant dans une solution appliquée choisie parmi le resvératrol, la catéchine et l'extrait de grenade est de 0,1 à 10 % p/v.

5. Matériau d'emballage selon l'une quelconque des revendications précédentes, dans lequel la teneur en nanoparticules de chitosane dans une solution appliquée formant la couche active est de 0,5 à 4 % p/v.

6. Matériau d'emballage selon l'une quelconque des revendications précédentes, dans lequel le chitosane dans la couche de chitosane et/ou la couche active a un poids moléculaire moyen de 10 à 300 kDa, tel que mesuré selon la description.

7. Matériau d'emballage selon l'une quelconque des revendications précédentes, dans lequel la couche de substrat polymère comprend du polyéthylène ou du polypropylène.

8. Procédé de fabrication d'un matériau d'emballage, éventuellement un matériau d'emballage selon l'une quelconque des revendications précédentes, comprenant les étapes consistant à :
(a) traiter une couche de substrat polymère avec des atomes d'oxygène neutres à une dose comprise entre 10²⁰ et 10²⁴ m⁻² ;
(b) appliquer une solution de chitosane sur la couche de substrat polymère traitée, pour former une couche de chitosane sur la couche de substrat polymère ; et
(c) appliquer une solution contenant un matériau antioxydant et des nanoparticules de chitosane sur la couche de chitosane, pour former une couche active sur la couche de chitosane.

9. Procédé selon la revendication 8, dans lequel après l'étape (b) et avant l'étape (c) il y a une étape de séchage de la couche de chitosane ; et/ou dans lequel après l'étape (c) il y a une étape de séchage de la couche active.

10. Procédé selon l'une quelconque des revendications 8 et 9, dans lequel la solution de chitosane utilisée à l'étape (b) est préparée en dissolvant de la poudre de chitosane dans de l'eau et en ajustant le pH de la solution résultante à 3 à 5.

11. Procédé selon l'une quelconque des revendications 8 à 10, dans lequel la solution utilisée à l'étape (c) comprend un polyphénol, 0,5 à 4 % p/v de nanoparticules de chitosane et 0,1 à 10 % p/v d'au moins un élément choisi parmi le resvératrol, la catéchine et l'extrait de grenade.

12. Procédé selon l'une quelconque des revendications 8 à 11, dans lequel les nanoparticules de chitosane sont préparées par gélification ionique d'une solution comprenant du chitosane, de l'eau et du tripolyphosphate de sodium, la solution comprenant éventuellement en outre un polyphénol et au moins un élément choisi parmi le resvératrol, la catéchine et l'extrait de grenade.

13. Utilisation d'un matériau d'emballage selon l'une quelconque des revendications 1 à 7 dans un emballage alimentaire.
